# EUROPEAN PATENT APPLICATION

(11) **EP 4 224 920 A1**
(43) Date of publication of application: **09.08.2023**
(21) Application number: 21874361.5
(22) Date of filing: 24.09.2021
(51) Int. Cl.: H04W 28/02

(54) **BSR TRIGGERING METHOD FOR RELAY, AND RELATED PRODUCT**

(30) Priority: 30.09.2020 CN 202011070046
(71) Applicant: Spreadtrum Communications (Shanghai) Co., Ltd., Shanghai 201203 (CN)
(72) Inventor: LIU, Xing, Shanghai 201203 (CN)
(74) Representative: Mewburn Ellis LLP
(86) International application number: PCT/CN2021/120456
(87) International publication number: WO 2022/068701

(57) **Abstract**

A method for triggering a buffer status report (BSR) by a relay and related products are provided in implementations of the disclosure. The relay is in a dual connectivity (DC) state, and the method includes the following. The relay determines whether a preset condition is met according to a data volume of a certain service, on condition that the relay determines that a bearer for the certain service is a split bearer. The relay determines a BSR triggering strategy for a protocol stack in the DC state according to whether the preset condition is met. With the technical solution provided in the disclosure, a network performance can be improved.

## Description

### TECHNICAL FIELD

This disclosure relates to the technical filed of communication processing, and in particular, to a method for triggering a buffer status report (BSR) by a relay and related products.

### BACKGROUND

Dual connectivity (DC) technology is a technology for accelerating wireless communication transmission. In a DC architecture, a terminal is connected with two base stations and communicates with the two base stations at the same time. For a service, a logical channel, or data carried, the terminal can be configured to perform transmission through only base station 1, only base station 2, or base station 1 and base station 2 at the same time. When the data carried is configured to be transmitted through base station 1 and base station 2 at the same time, such bearer is referred to as a split bearer.

When the relay communicates with a network through DC, there is no implementation solution for how the relay triggers a buffer status report (BSR) and/or a pre-emptive BSR in a split bearer scenario, which affects a performance of the network.

### SUMMARY

A method for triggering a buffer status report (BSR) by a relay and related products are provided in implementations of the disclosure, which aims to determine a BSR triggering strategy in a dual connectivity (DC) state by setting a preset condition and determining whether a data volume of a certain service meets the preset condition, thereby implementing a pre-emptive BSR and improving a network performance.

In a first aspect, a method for triggering a BSR by a relay is provided. The relay is in a DC state, and the method includes the following. The relay determines whether a preset condition is met according to a data volume of a certain service, on condition that the relay determines that a bearer for the certain service is a split bearer. The relay determines a BSR triggering strategy for a protocol stack in the DC state according to whether the preset condition is met.

In a second aspect, a relay device is provided. The relay device includes a processing unit. The processing unit is configured to determine whether a preset condition is met according to a data volume of a certain service, on condition that the processing unit is configured to determine that a bearer for the certain service is a split bearer. The processing unit is configured to determine a BSR triggering strategy for a protocol stack in a DC state according to whether the preset condition is met.

In a third aspect, a relay device is provided. The relay device includes a processor, a memory configured to store one or more programs, and a communication interface. The one or more programs are configured to be executed by the processor and include instructions configured to perform the method in the first aspect.

In a fourth aspect, a computer-readable storage medium is provided. The computer-readable storage medium stores computer programs for electronic data interchange. The computer programs are operable with a computer to perform the method in the first aspect.

In a fifth aspect, a computer program product is provided. The computer program product includes a non-transitory computer-readable storage medium storing computer programs. The computer programs are operable with a computer to perform some or all of operations described in the first aspect in implementations of the disclosure. The computer program product may be a software installation package.

In a sixth aspect, a chip system is provided. The chip system includes at least one processor, a memory, and an interface circuit. The memory, the transceiver, and the at least one processor are connected with each other via a line. The at least one memory is configured to store computer programs which, when executed by the processor, are operable with the processor to implement the method in the first aspect.

With the technical solution provided in the disclosure, in case of determining that the bearer for the certain service is the split bearer, it is determined whether the preset condition is met according to the data volume of the certain service, and the BSR and/or pre-emptive BSR triggering strategy for the protocol stack in the DC state is determined, thereby implementing a BSR and/or pre-emptive BSR operation mechanism by the relay, and thus improving a network performance.

### BRIEF DESCRIPTION OF THE DRAWINGS

The following will introduce accompanying drawings required for describing implementations of the disclosure.
FIG. 1 is a schematic system diagram illustrating an architecture of an exemplary communication system.
FIG. 2a is a schematic diagram illustrating an integrated access backhaul (IAB) architecture.
FIG. 2b is a schematic diagram illustrating a relay dual connectivity (DC) network architecture.
FIG. 3 is a schematic flowchart illustrating a method for triggering a buffer status report (BSR) by a relay provided in the disclosure.
FIG. 4 is a schematic flowchart illustrating a method for triggering a BSR by a relay provided in implementation 1 of the disclosure.
FIG. 5 is a schematic flowchart illustrating a method for triggering a BSR by a relay provided in implementation 2 of the disclosure.
FIG. 6 is a schematic flowchart illustrating a method for triggering a BSR by a relay provided in implementation 3 of the disclosure.
FIG. 7 is a schematic structural diagram illustrating a relay device provided in implementations of the disclosure.
FIG. 8 is a schematic structural diagram illustrating an electronic device provided in implementations of the disclosure.

### DETAILED DESCRIPTION

The following will illustrate implementations of the disclosure with reference to accompanying drawings of implementations of the disclosure.

The term "and/or" in the disclosure is simply an illustration of an association relationship of associated objects, indicating that three relationships can exist, for example, A and/or B, which can indicate the existence of A alone, A and B together, and B alone. In addition, the character "/" in the disclosure generally indicates that associated objects are in an "or" relationship.

In implementations of the disclosure, "multiple" or "a plurality of" refers to two or more. The descriptions such as first or second appearing in implementations of the disclosure are only for illustrative purposes and distinguishing the described objects, and are not in any order, nor do they indicate a particular limitation on the number of devices in implementations of the disclosure, and do not constitute any limitation on implementations of the disclosure. The term "connection" appearing in implementations of the disclosure refers to various connections, such as a direct connection or an indirect connection, to achieve communication between devices, which is not limited in implementations of the disclosure.

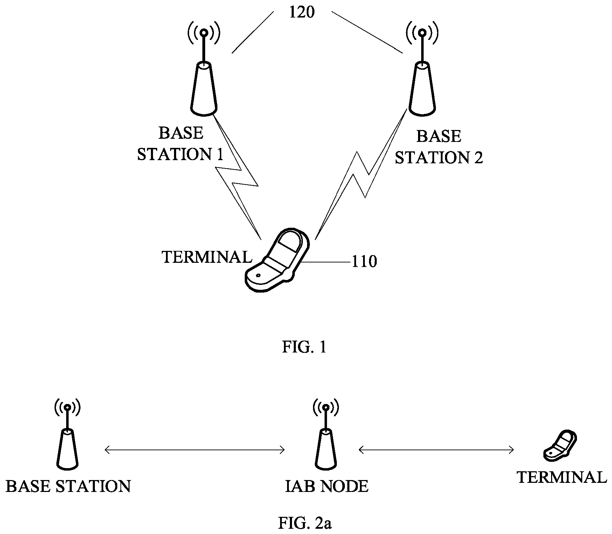

Technical solutions in implementations of the disclosure can be applicable to an exemplary communication system illustrated in FIG. 1. The exemplary communication system includes a terminal 110 and network devices 120, where the terminal 110 is in communication connection with the network devices 120, the network devices 120 may be base station 1 and base station 2, and the terminal 110 connects with base station 1 and base station 2 at the same time, i.e., the terminal 110 is in a dual connectivity (DC) state.

The exemplary communication system, for example, may be a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a universal mobile telecommunication system (UMTS), a next-generation communication system, or other communication systems.

Generally speaking, a conventional communication system supports a limited number of connections and therefore is easy to implement. However, with development of communication technology, a mobile communication system not only supports conventional communication but also supports, for example, device to device (D2D) communication, machine to machine (M2M) communication, machine type communication (MTC), and vehicle to vehicle (V2V) communication. Implementations herein can also be applicable to these communication systems. Optionally, a communication system in implementations of the disclosure can be applicable to a carrier aggregation (CA) scenario, a DC scenario, and a standalone (SA) scenario.

The terminal 110 in implementations of the disclosure may refer to a user equipment (UE), an access terminal, a subscriber unit, a subscriber station, a mobile station, a remote station, a remote terminal, a mobile device, a user terminal, a terminal, a wireless communication device, a user agent, a user device, etc. The terminal may also be a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, a relay device, an in-vehicle device, a wearable device, or a terminal device in a further 5^{th}-generation (5G) network, a terminal device in a future evolved public land mobile network (PLMN), etc., which is not limited in implementations of the disclosure.

The network devices 120 in implementations of the disclosure may be a device that is used to communicate with the terminal. The network device may be an evolved NodeB (eNB or eNodeB) in the LTE system, or a radio controller in a cloud radio access network (CRAN) scenario. Alternatively, the network device may also be a relay device, an access point (AP), an in-vehicle device, a wearable device, a network device in the future 5G network, a network device in the future evolved PLMN, or one antenna panel or one set of antenna panels (including multiple antenna panels) in a base station in the 5G system. Alternatively, the network device may also be a network node constructing a next generation NodeB (gNB) or a transmission point (TP), such as a baseband unit (BBU), a distributed unit (DU), or the like, which will not be limited herein.

In some deployments, the gNB may include a centralized unit (CU) and a DU. The gNB also may include an active antenna unit (AAU). The CU achieves a part of functions of the gNB, and the DU achieves a part of functions of the gNB. For example, the CU is responsible for processing non-real-time protocols and services, to achieve functions of a radio resource control (RRC) layer and a packet data convergence protocol (PDCP) layer. The DU is responsible for processing physical-layer protocols and real-time services, to achieve functions of a radio link control (RLC) layer, a medium access control (MAC) layer, and a physical (PHY) layer.

Referring to FIG. 2a, FIG. 2a provides an integrated access backhaul (IAB) technology architecture, which can be understood as a relay technology. For the IAB architecture, an NR Uu (Uu specifically refers to an interface between a base station and a terminal in case of a direct connection) transmission mechanism is used between an IAB node and the base station as well as between the IAB node and the terminal.

During IAB discussion, an uplink (UL) resource for the terminal is allocated by the IAB node, an UL resource for the IAB node is allocated by the base station, and naturally the terminal needs to transmit a BSR to the IAB node to request a resource and the IAB node needs to transmit a BSR to the base station to request a resource. However, such a relay technology may cause a transmission delay. For example, the terminal transmits a BSR to the IAB node to request a resource when a data packet first arrives at the terminal, then the terminal transmits a specific data packet after the IAB node allocates resources, and the IAB node transmits a BSR to the base station to request a resource after the IAB node receives the specific data packet, resulting in an additional transmission delay.

To reduce extra transmission time, a pre-emptive BSR mechanism is introduced. The IAB node transmits a BSR to the base station once the IAB node receives a BSR from the terminal. That is, the IAB node informs the base station in advance that a data volume predicted by the IAB node needs to be transmitted although data has not been received, so that the base station can schedule resources in advance.

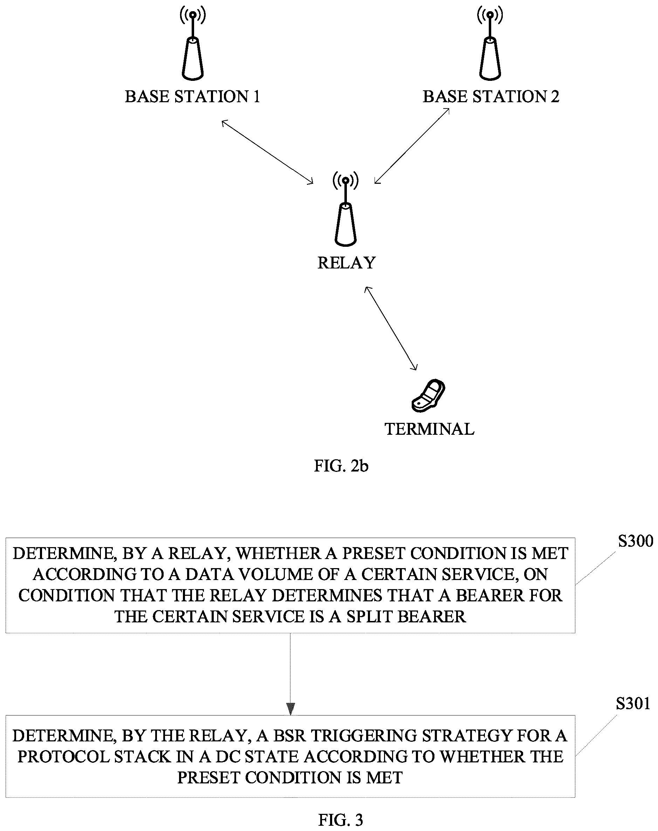

The pre-emptive BSR mechanism, although introduced in the IAB architecture, can be applied to all relay forwarding scenarios. As long as a transmission resource for a relay is allocated by a receiving end, the relay can trigger in advance a BSR to the receiving end to request a resource before receiving a specific data packet from a transmitting end, thereby reducing a transmission delay of data due to the introduction of the relay. However, in a relay DC network architecture as illustrated in FIG. 2b, for example, the terminal communicates with the network through a relay, but due to an insufficient rate of the relay, the relay is simultaneously connected with two base stations and transmits data to the network through a split bearer. In this case, the pre-emptive BSR mechanism is unable to be implemented.

In the disclosure, the BSR may carry information indicating a data volume of existing data, and the pre-emptive BSR may carry information indicating a predicted data volume of data to-be-received.

Referring to FIG. 3, FIG. 3 provides a method for triggering a BSR by a relay. The method is implemented in the architecture illustrated in FIG. 2b and is performed by the relay illustrated in FIG. 2b. As illustrated in FIG. 3, the method includes the following.

S300, the relay determines whether a preset condition is met according to a data volume of a certain service, on condition that the relay determines that a bearer for the certain service is a split bearer.

For definition of the split bearer, reference can be made to the above definition, which will not be repeated herein.

The certain service may be a service of a single UE or a service of multiple UEs.

S301, the relay determines a BSR triggering strategy for a protocol stack in the DC state according to whether the preset condition is met.

With the technical solution provided in the disclosure, in case of determining that the bearer for the certain service is the split bearer, it is determined whether the preset condition is met according to the data volume of the certain service, and the BSR triggering strategy for the protocol stack in the DC state is determined, thereby implementing a pre-emptive BSR operation mechanism by the relay, and thus improving a network performance.

In an optional solution, the above method may specifically include at least one of the following. If a predicted data volume of the certain service from a child node is greater than or equal to a first threshold, the relay determines that the preset condition is met, and triggers a pre-emptive BSR in a first primary protocol layer and/or a first secondary protocol layer. If the data volume of the certain service is less than the first threshold, the relay determines that the preset condition is not met, and triggers the pre-emptive BSR in only the first primary protocol layer. The first primary protocol layer is a first protocol layer associated with a primary base station, and the first secondary protocol layer is a first protocol layer associated with a secondary base station.

The first threshold may be a preset threshold.

The first primary protocol layer may specifically be a first protocol layer associated with the primary base station in the relay, and the first secondary protocol layer may be a first protocol layer associated with the secondary base station in the relay. The first protocol layer may specifically be an MAC layer.

In an optional solution, the above method may specifically include at least one of the following. The relay obtains a sum of an existing data volume of the certain service and a predicted data volume of the certain service from a child node. If the sum is greater than or equal to a second threshold, the relay determines that the preset condition is met, and a second protocol layer of the relay indicates a data volume of the second protocol layer to a third primary protocol layer and a third secondary protocol layer. If the sum is greater than or equal to the second threshold, the relay determines that the preset condition is met, and the second protocol layer of the relay indicates the data volume of the second protocol layer to a primary protocol stack and a secondary protocol stack. If the sum is less than the second threshold, the relay determines that the preset condition is not met, and the second protocol layer of the relay indicates the data volume of the second protocol layer to the third primary protocol layer. If the sum is less than the second threshold, the relay determines that the preset condition is not met, and the second protocol layer of the relay indicates the data volume of the second protocol layer to the primary protocol stack. If the third primary protocol layer of the relay receives a data-volume indication from the second protocol layer, a first primary protocol layer of the relay triggers the BSR. If the third secondary protocol layer of the relay receives the data-volume indication from the second protocol layer, a first secondary protocol layer of the relay triggers the BSR. If the primary protocol stack of the relay receives the data-volume indication from the second protocol layer, the first primary protocol layer of the relay triggers the BSR. If the secondary protocol stack of the relay receives the data-volume indication from the second protocol layer, the first secondary protocol layer of the relay triggers the BSR.

In an optional solution, the above method may specifically include at least one of the following. The relay obtains a sum of an existing data volume of the certain service and a predicted data volume of the certain service from a child node. If the sum is greater than or equal to a second threshold, the relay determines that the preset condition is met, and a second protocol layer of the relay transmits an indication to a third secondary protocol layer. If the sum is greater than or equal to the second threshold, the relay determines that the preset condition is met, and the second protocol layer of the relay transmits the indication to a secondary protocol stack. If the third secondary protocol layer of the relay receives a data-volume indication from the second protocol layer, a first secondary protocol layer of the relay triggers a pre-emptive BSR. If the secondary protocol stack of the relay receives the data-volume indication from the second protocol layer, the first secondary protocol layer of the relay triggers the pre-emptive BSR. The third primary protocol layer is a third protocol layer associated with a primary base station, the primary protocol stack is a protocol stack associated with the primary base station, the secondary protocol stack is a protocol stack associated with a secondary base station, and the third secondary protocol layer is a third protocol layer associated with the secondary base station.

The third protocol layer is an RLC layer, and the second protocol layer is a PDCP layer or a backhaul adaptation protocol (BAP) layer. It needs to be noted that, although the third primary protocol layer and the third secondary protocol layer have the same name, a device associated with the third primary protocol layer is different from that associated with the third secondary protocol layer, and hence the third primary protocol layer and the third secondary protocol layer are actually two protocol layers in the relay.

In an optional solution, the protocol stack is a preset protocol stack or a protocol stack determined by a network device.

### Implementation 1

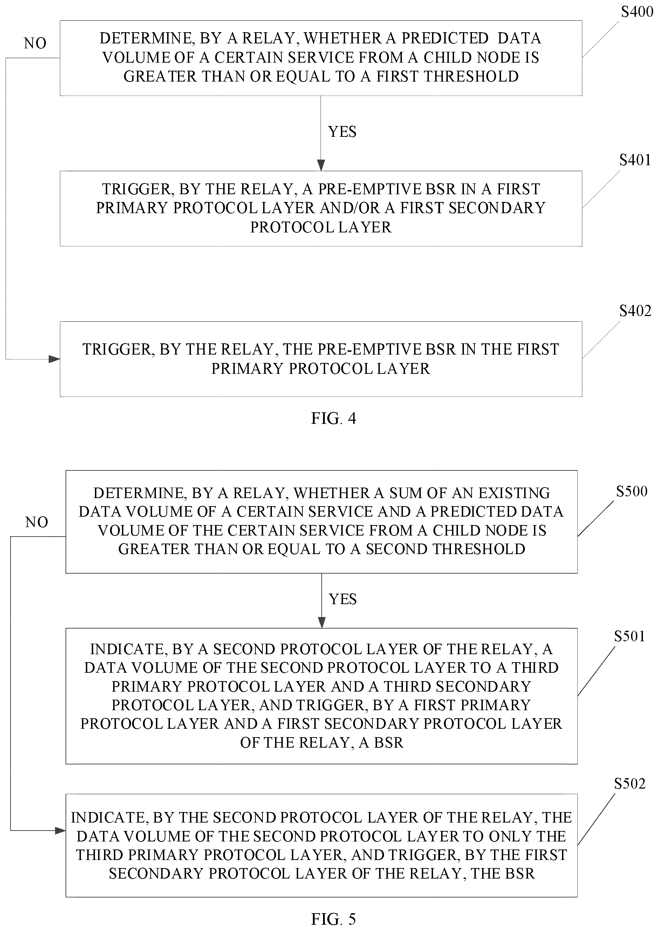

A method for triggering a BSR by a relay is provided in implementation 1 of the disclosure. The method is implemented in the network architecture illustrated in FIG. 2b and performed by the relay. The relay includes a first primary protocol layer, where the first primary protocol layer may be an MAC layer, i.e., a primary MAC layer, associated with a primary base station, in the relay. The relay further includes a first secondary protocol layer, where the first secondary protocol layer may be an MAC layer, i.e., a secondary MAC layer, associated with a secondary base station, in the relay. As illustrated in FIG. 4, the method includes the following.

S400, the relay determines whether a predicted data volume of a certain service from a child node is greater than or equal to a first threshold.

Implementation methods for predicting the data volume of the certain service from the child node by the relay may specifically include the following. The data volume of the certain service can be predicted according to a content of a BSR received from the child node. In actual applications, the data volume of the certain service can be predicted according to a scheduling resource allocated to the child node.

S401, if the predicted data volume of the certain service from the child node is greater than or equal to the first threshold, the relay triggers a pre-emptive BSR in the first primary protocol layer and/or the first secondary protocol layer.

S402, if the predicted data volume of the certain service from the child node is less than the first threshold, the relay triggers the pre-emptive BSR in only the first primary protocol layer.

In implementations of the disclosure, the certain service may specifically be a certain logical channel, or a certain logical channel group in actual applications.

In implementation 1 of the disclosure, determination of whether the data volume of the certain service from the child node is greater than or equal to the first threshold is merely a necessary condition rather than a sufficient condition for triggering the pre-emptive BSR. Whether the pre-emptive BSR is really triggered at last needs to consider other conditions, for example, when a BSR from a child node is received, or when a transmission resource is to be allocated to the child node.

In the technical solution of implementation 1, if a data volume to-be-received predicted by the relay exceeds a threshold, the relay triggers the pre-emptive BSR to the primary and secondary base stations on condition that other conditions for triggering the pre-emptive BSR are met. Otherwise, the relay triggers the pre-emptive BSR to only the primary base station. In implementation 1 of the disclosure, a pre-emptive BSR operating mechanism is designed on condition that the relay communicates with the network through DC and transmits data to the network through the split bearer, thereby improving a network performance.

### Implementation 2

A method for triggering a BSR by a relay is provided in implementation 2 of the disclosure. The method is implemented in the network architecture illustrated in FIG. 2b and performed by the relay. The relay includes a second primary protocol layer and a third primary protocol layer. The second primary protocol layer may be a PDCP layer or a BAP layer, i.e., a primary PDCP layer or a primary BAP layer, associated with a primary base station, in the relay, and the third primary protocol layer may specifically be an RLC layer associated with the primary base station, in the relay. The relay includes a second secondary protocol layer and a third secondary protocol layer. The second secondary protocol layer may be a PDCP layer or a BAP layer, i.e., a secondary PDCP layer or a secondary BAP layer, associated with a secondary base station, in the relay, and the third secondary protocol layer may specifically be an RLC layer associated with the secondary base station, in the relay. As illustrated in FIG. 5, the method includes the following.

S500, the relay determines whether a sum of an existing data volume of a certain service and a predicted data volume of the certain service from a child node is greater than or equal to a second threshold.

For implementation methods for predicting the data volume of the certain service from the child node by the relay, reference can be made to the specific description of the operations at S400, which will not be repeated herein.

The existing data volume may be a sum of a data volume of a second protocol layer and a data volume of a third protocol layer (including data to-be-initially-transmitted of the third primary protocol layer and data to-be-initially-transmitted of the third secondary protocol layer).

The second threshold may be the same as, greater than, or less than the first threshold in implementation 1.

S501, if the relay determines that the sum is greater than or equal to the second threshold, the second protocol layer of the relay indicates the data volume of the second protocol layer to the third primary protocol layer (or a primary protocol stack) and the third secondary protocol layer (or a secondary protocol stack), and a first primary protocol layer and a first secondary protocol layer of the relay trigger the BSR.

S502, if the relay determines that the sum is less than the second threshold, the second protocol layer of the relay indicates the data volume of the second protocol layer to only the third primary protocol layer (or the primary protocol stack), and the first secondary protocol layer of the relay triggers the BSR.

In implementations of the disclosure, the certain service may specifically be a certain logical channel, or a certain logical channel group in actual applications.

In the technical solution in implementation 2, if the relay determines that the sum of the existing data volume of the certain service and the predicted data volume of the certain service from the child node exceeds the second threshold, the relay indicates data of the second protocol layer to the third primary protocol layer and the third secondary protocol layer, and then the first primary protocol layer and the first secondary protocol layer of the relay trigger the BSR. Otherwise, the relay indicates the data of the second protocol layer to the third primary protocol layer, and then only the first primary protocol layer triggers the BSR. In implementation 2 of the disclosure, a BSR operating mechanism is designed on condition that the relay communicates with the network through DC and transmits data to the network through the split bearer, thereby improving a network performance.

### Implementation 3

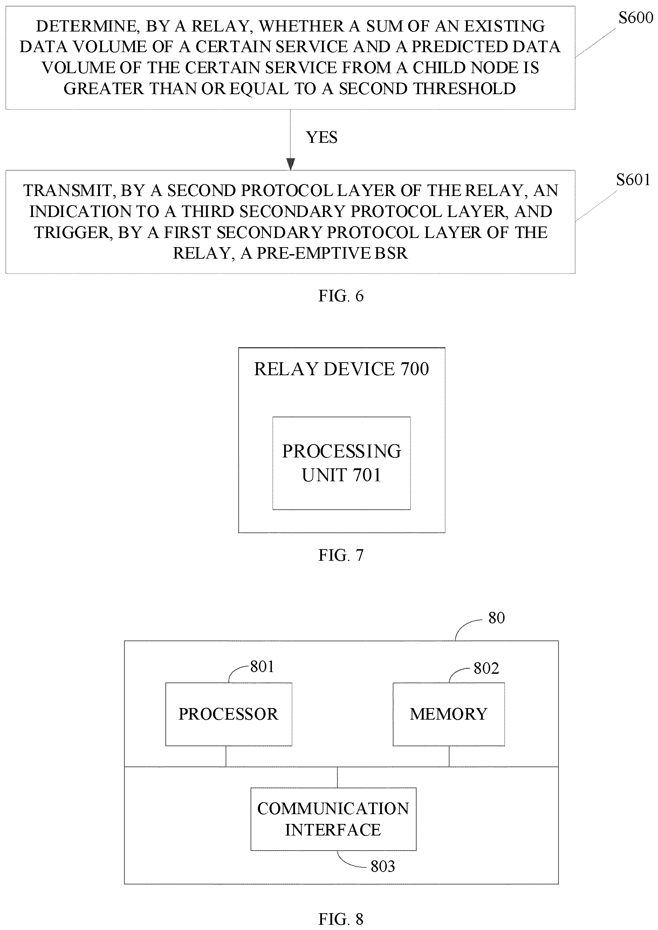

A method for triggering a BSR by a relay is provided in implementation 3 of the disclosure. The method is implemented in the network architecture illustrated in FIG. 2b and performed by the relay. The relay includes a second primary protocol layer and a third primary protocol layer. The second primary protocol layer may be a PDCP layer or a BAP layer, i.e., a primary PDCP layer or a primary BAP layer, associated with a primary base station, in the relay, and the third primary protocol layer may specifically be an RLC layer associated with the primary base station, in the relay. The relay includes a second secondary protocol layer and a third secondary protocol layer. The second secondary protocol layer may be a PDCP layer or a BAP layer, i.e., a secondary PDCP layer or a secondary BAP layer, associated with a secondary base station, in the relay, and the third secondary protocol layer may specifically be an RLC layer associated with the secondary base station, in the relay. As illustrated in FIG. 6, the method includes the following.

S600, the relay determines whether a sum of an existing data volume of a certain service and a predicted data volume of the certain service from a child node is greater than or equal to a second threshold.

For implementation methods for predicting the data volume of the certain service from the child node by the relay, reference can be made to the specific description of the operations at S400, which will not be repeated herein.

The existing data volume may be a sum of a data volume of a second protocol layer and a data volume of a third protocol layer (including data to-be-initially-transmitted of the third primary protocol layer and data to-be-initially-transmitted of the third secondary protocol layer).

The second threshold may be the same as, greater than, or less than the first threshold in implementation 1.

S601, if the relay determines that the sum is greater than or equal to the second threshold, the second protocol layer of the relay transmits an indication to the third secondary protocol layer (or a secondary protocol stack), and the first secondary protocol layer of the relay triggers a pre-emptive BSR.

In implementations of the disclosure, the certain service may specifically be a certain logical channel, or a certain logical channel group in actual applications.

In the technical solution in implementation 3, if the relay determines that the sum of the existing data volume of the certain service and the predicted data volume of the certain service from the child node exceeds the second threshold, the relay transmits the indication to the third secondary protocol layer, and then the first secondary protocol layer of the relay triggers the pre-emptive BSR. Otherwise, only the first primary protocol layer of the relay triggers the pre-emptive BSR. In implementation 2 of the disclosure, a pre-emptive BSR operating mechanism is designed on condition that the relay communicates with the network through DC and transmits data to the network through the split bearer, thereby improving a network performance.

It can be understood that, in order to implement the above functions, the UE includes hardware and/or software modules for performing the respective functions. In combination with the algorithmic operations of various examples illustrated in the implementations disclosed herein, the disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the illustrated functions for each particular application in combination with implementations, but such implementation should not be considered as beyond the scope of the disclosure.

According to the implementations of the disclosure, division of functional modules may be performed for the electronic device in accordance with the foregoing method examples. For example, each functional module may be divided according to each function, and two or more functions may be integrated in one processing module. The above-mentioned integrated module can be implemented in the form of hardware. It should be noted that the division of modules in the implementations is schematic, and is merely a logical function division, and there may be other division manners in actual implementations.

In case of dividing each functional module according to each function, FIG. 7 is a schematic diagram illustrating a relay device. As illustrated in FIG. 7, the relay device 700 includes a processing unit 701.

The processing unit 701 is configured to support a UE to perform the operations at S300, S301, etc., and/or configured to support the UE to perform the operations in other processes of the technology described in the disclosure.

It needs to be noted that, all related contents of each operation involved in the foregoing method implementations may be referred to functional description of a corresponding functional module, which is not repeated herein.

In case of using integrated units, the relay device may include a processing module, a storage module, and a communication module. The processing module may be configured to perform control management on actions of the relay device, for example, the processing module may be configured to support the electronic device to execute the operations executed by the processing unit. The storage module may be configured to support the electronic device to store program codes, data, and the like. The communication module may be configured to support the electronic device to communicate with other devices.

The processing module may be a processor or a controller that can implement or execute the various illustrative logical blocks, modules, and circuits described in combination with the disclosed contents in the disclosure. The processor may also be a combination that implements a computing function, for example, a combination that includes one or more microprocessors, a combination of digital signal processing (DSP) and a microprocessor, etc. The storage module may be a memory. The communication module may specifically be a radio frequency circuit, a Bluetooth chip, a wireless fidelity (Wi-Fi) chip, or a device that interacts with other electronic devices.

It can be understood that, the interface connection relationship among the modules illustrated in implementations of the disclosure is only illustrative, and does not constitute a limitation to the structure of the UE. In other implementations of the disclosure, the UE may also adopt different interface connection manners in the foregoing implementations or a combination of multiple interface connection manners.

Referring to FIG. 8, FIG. 8 illustrates an electronic device 80 provided in implementations of the disclosure. The electronic device 80 includes a processor 801, a memory 802, and a communication interface 803, where the processor 801, the memory 802, and the communication interface 803 communicate with each other via a bus.

The memory 802 includes, but is not limited to, a random access memory (RAM), a read-only memory (ROM), an erasable programmable read-only memory (EPROM), or a compact disc read-only memory (CD-ROM). The memory 802 is configured to store related computer programs and data. The communication interface 803 is configured to receive and transmit data.

The processor 801 may be one or more central processing units (CPU). On condition that the processor 801 is a CPU, the CPU may be a single-core CPU or a multi-core CPU.

The processor 801 may include one or more processing units, for example, the processing unit may include an application processor (AP), a modem processor, a graphics processing unit (GPU), an image signal processor (ISP), a controller, a video codec, a digital signal processor (DSP), a baseband processor, and/or a neural-network processing unit (NPU). Different processing units may be separate parts or integrated in one or more processors. In some implementations, the UE may also include one or more processing units. The controller may generate an operation control signal according to an instruction operation code and a timing signal, so as to complete control of taking an instruction and executing the instruction. In other implementations, the processing unit may also be provided with a memory for storing instructions and data. Exemplarily, the memory in the processing unit may be a cache memory, where the memory can store an instruction or data that is just used or cycled by the processing unit. If the processing unit needs to reuse the instruction or data, the instruction or data can be invoked directly from the memory. In this way, repeated access is avoided, and a waiting time of the processing unit is reduced, thereby improving efficiency of the UE in processing data or executing instructions.

In some implementations, the processor 801 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) card interface, and/or a universal serial bus (USB) interface. The USB interface is an interface complying with a USB standard specification, and may specifically be a mini USB interface, a micro USB interface, a USB type-C interface, or the like. The USB interface may be configured to connect a charger to charge a UE, and may also be configured to transmit data between the UE and a peripheral device. The USB interface may also be configured to connect to an earphone to play audio through the earphone.

The processor 801 of the electronic device 80 is configured to read computer program codes stored in the memory 802 to: determine whether a preset condition is met according to a data volume of a certain service, in case of determining that a bearer for the certain service is a split bearer, and determine a BSR triggering strategy for a protocol stack in a DC state according to whether the preset condition is met.

All related contents of each scenario involved in the foregoing method implementations may be referred to functional description of a corresponding functional module, which is not repeated herein.

A chip system is further provided in implementations of the disclosure. The chip system includes at least one processor, a memory, and an interface circuit, where the memory, the transceiver, and the at least one processor are interconnected via a line. The at least one memory is configured to store computer programs which, when executed by the processor, are operable with the processor to implement the processes of the method illustrated in FIGs. 3 - 6.

A computer-readable storage medium is further provided in implementations of the disclosure. The computer-readable storage medium is configured to store computer programs which, when run on a network device, are operable with the network device to implement the processes of the method illustrated in FIGs. 3 - 6.

A computer program product is further provided in implementations of the disclosure. The computer program product, when run on a terminal, is operable with the terminal to implement the processes of the method illustrated in FIGs. 3 - 6.

A relay device is further provided in implementations of the disclosure. The relay device includes a processor, a memory configured to store one or more programs, and a communication interface. The one or more programs are configured to be executed by the processor and include instructions configured to perform the method of implementations illustrated in FIGs. 3 - 6.

The foregoing solution of the implementations of the disclosure is mainly introduced from the viewpoint of execution of the method side. It can be understood that, in order to implement the above functions, the electronic device includes hardware structures and/or software modules for performing the respective functions. Those skilled in the art should easily recognize that, in combination with the units and algorithmic operations of various examples illustrated in the implementations provided herein, the disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the illustrated functions for each particular application, but such implementation should not be considered as beyond the scope of the disclosure.

According to the implementations of the disclosure, division of functional units may be performed for the electronic device in accordance with the foregoing method examples. For example, each functional unit may be divided according to each function, and two or more functions may be integrated in one processing unit. The above-mentioned integrated unit can be implemented in the form of hardware or software functional units. It should be noted that the division of units in the implementations of the disclosure is schematic, and is merely a logical function division, and there may be other division manners in actual implementations.

It is to be noted that for the sake of simplicity, the foregoing method implementations are described as a series of action combinations. However, it will be appreciated by those skilled in the art that the disclosure is not limited by the sequence of actions described. According to the disclosure, some operations may be performed in other orders or simultaneously. Besides, it will be appreciated by those skilled in the art that the implementations described in the specification are preferred implementations, and the actions and modules involved are not necessarily essential to the disclosure.

In the foregoing implementations, the description of each implementation has its own emphasis. For the parts not described in detail in one implementation, reference may be made to related descriptions in other implementations.

In several implementations provided in the disclosure, it will be appreciated that the apparatuses disclosed may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interfaces, apparatuses, or units, and may be electrical, or otherwise.

Units illustrated as separated parts may or may not be physically separated. Components or parts displayed as units may or may not be physical units, and may reside at one location or may be distributed to multiple network units. Part of or all of the units may be selectively adopted according to practical needs to achieve desired objectives of the solutions of implementations.

In addition, various functional units described in various implementations of the disclosure may be integrated into one processing unit or may be presented as a number of physically separated units, and two or more units may be integrated into one unit. The integrated unit may be implemented by a form of hardware or a software functional unit.

If the integrated units are implemented as software functional units and sold or used as standalone products, they may be stored in a computer-readable memory. According to such an understanding, the essential technical solution, or the portion that contributes to the related art, or all or part of the technical solution of the disclosure may be expressed as software products. The computer software products can be stored in a memory and may include multiple instructions that, when executed, can cause a computer device (e.g., a personal computer, a server, a network device, etc.) to execute all or part of operations of the methods described in various implementations of the disclosure. The above memory may include various kinds of media that can store program codes, such as a USB flash disk, an ROM, an RAM, a mobile hard disc, a magnetic disk, or an optical disk.

It will be understood by those of ordinary skill in the art that all or part of the operations of the various methods in the implementations described above may be accomplished by means of a program to instruct associated hardware, and the program may be stored in a computer-readable memory, which may include a flash disk, an ROM, an RAM, a magnetic disk, or an optical disk.

## Claims

1. A method for triggering a buffer status report (BSR) by a relay, the relay being in a dual connectivity (DC) state, and the method comprising:
determining, by the relay, whether a preset condition is met according to a data volume of a certain service, on condition that the relay determines that a bearer for the certain service is a split bearer; and
determining, by the relay, a BSR triggering strategy for a protocol stack in the DC state according to whether the preset condition is met.

2. The method of claim 1, specifically comprising at least one of
if a predicted data volume of the certain service from a child node is greater than or equal to a first threshold, determining, by the relay, that the preset condition is met, and triggering, by the relay, a pre-emptive BSR in a first primary protocol layer and/or a first secondary protocol layer; or
if the data volume of the certain service is less than the first threshold, determining, by the relay, that the preset condition is not met, and triggering, by the relay, the pre-emptive BSR in only the first primary protocol layer, wherein
the first primary protocol layer is a first protocol layer associated with a primary base station, and the first secondary protocol layer is a first protocol layer associated with a secondary base station.

3. The method of claim 1, specifically comprising at least one of
obtaining, by the relay, a sum of an existing data volume of the certain service and a predicted data volume of the certain service from a child node; and
if the sum is greater than or equal to a second threshold, determining, by the relay, that the preset condition is met, and indicating, by a second protocol layer of the relay, a data volume of the second protocol layer to a third primary protocol layer and a third secondary protocol layer;
if the sum is greater than or equal to the second threshold, determining, by the relay, that the preset condition is met, and indicating, by the second protocol layer of the relay, the data volume of the second protocol layer to a primary protocol stack and a secondary protocol stack;
if the sum is less than the second threshold, determining, by the relay, that the preset condition is not met, and indicating, by the second protocol layer of the relay, the data volume of the second protocol layer to the third primary protocol layer; or
if the sum is less than the second threshold, determining, by the relay, that the preset condition is not met, and indicating, by the second protocol layer of the relay, the data volume of the second protocol layer to the primary protocol stack, wherein
the third primary protocol layer is a third protocol layer associated with a primary base station, the primary protocol stack is a protocol stack associated with the primary base station, the secondary protocol stack is a protocol stack associated with a secondary base station, and the third secondary protocol layer is a third protocol layer associated with the secondary base station.

4. The method of claim 3, comprising at least one of:
if the third primary protocol layer of the relay receives a data-volume indication from the second protocol layer, triggering, by a first primary protocol layer of the relay, the BSR;
if the third secondary protocol layer of the relay receives the data-volume indication from the second protocol layer, triggering, by a first secondary protocol layer of the relay, the BSR;
if the primary protocol stack of the relay receives the data-volume indication from the second protocol layer, triggering, by the first primary protocol layer of the relay, the BSR; or
if the secondary protocol stack of the relay receives the data-volume indication from the second protocol layer, triggering, by the first secondary protocol layer of the relay, the BSR.

5. The method of claim 1, specifically comprising at least one of
obtaining, by the relay, a sum of an existing data volume of the certain service and a predicted data volume of the certain service from a child node; and
if the sum is greater than or equal to a second threshold, determining, by the relay, that the preset condition is met, and transmitting, by a second protocol layer of the relay, an indication to a third secondary protocol layer; or
if the sum is greater than or equal to the second threshold, determining, by the relay, that the preset condition is met, and transmitting, by the second protocol layer of the relay, the indication to a secondary protocol stack, wherein
the third primary protocol layer is a third protocol layer associated with a primary base station, the primary protocol stack is a protocol stack associated with the primary base station, the secondary protocol stack is a protocol stack associated with a secondary base station, and the third secondary protocol layer is a third protocol layer associated with the secondary base station.

6. The method of claim 5, comprising at least one of:
if the third secondary protocol layer of the relay receives a data-volume indication from the second protocol layer, triggering, by a first secondary protocol layer of the relay, a pre-emptive BSR; or
if the secondary protocol stack of the relay receives the data-volume indication from the second protocol layer, triggering, by the first secondary protocol layer of the relay, the pre-emptive BSR.

7. The method of any one of claims 2 to 6, wherein the first protocol layer is a medium access control (MAC) layer.

8. The method of any one of claims 3 to 6, wherein the third protocol layer is a radio link control (RLC) layer, and the second protocol layer is a packet data convergence protocol (PDCP) layer or a backhaul adaptation protocol (BAP) layer.

9. The method of any one of claims 1 to 8, wherein the protocol stack is a preset protocol stack or a protocol stack determined by a network device.

10. A relay device, comprising:
a processing unit configured to determine whether a preset condition is met according to a data volume of a certain service, on condition that the processing unit is configured to determine that a bearer for the certain service is a split bearer; and
the processing unit being configured to determine a buffer status report (BSR) triggering strategy for a protocol stack in a dual connectivity (DC) state according to whether the preset condition is met.

11. The relay device of claim 10, wherein the processing unit is specifically configured to:
determine that the preset condition is met, and triggering a pre-emptive BSR in a first primary protocol layer and/or a first secondary protocol layer, if a predicted data volume of the certain service from a child node is greater than or equal to a first threshold; and/or
determine that the preset condition is not met, and triggering the pre-emptive BSR in only the first primary protocol layer, if the data volume of the certain service is less than the first threshold, wherein
the first primary protocol layer is a first protocol layer associated with a primary base station, and the first secondary protocol layer is a first protocol layer associated with a secondary base station.

12. The relay device of claim 11, wherein
the processing unit is configured to obtain a sum of an existing data volume of the certain service and a predicted data volume of the certain service from a child node; and
the processing unit is configured to determine that the preset condition is met and control a second protocol layer of the relay to indicate a data volume of the second protocol layer to a third primary protocol layer and a third secondary protocol layer, if the sum is greater than or equal to a second threshold;
the processing unit is configured to determine that the preset condition is met and control the second protocol layer of the relay to indicate the data volume of the second protocol layer to a primary protocol stack and a secondary protocol stack, if the sum is greater than or equal to a second threshold;
the processing unit is configured to determine that the preset condition is not met and control the second protocol layer of the relay to indicate the data volume of the second protocol layer to the third primary protocol layer, if the sum is less than the second threshold; or
the processing unit is configured to determine that the preset condition is not met and control the second protocol layer of the relay to indicate the data volume of the second protocol layer to the primary protocol stack, if the sum is less than the second threshold, wherein
the third primary protocol layer is a third protocol layer associated with a primary base station, the primary protocol stack is a protocol stack associated with the primary base station, the secondary protocol stack is a protocol stack associated with a secondary base station, and the third secondary protocol layer is a third protocol layer associated with the secondary base station.

13. The relay device of claim 12, wherein
the processing unit is configured to control a first primary protocol layer of the relay to trigger the BSR, if the third primary protocol layer of the relay receives a data-volume indication from the second protocol layer;
the processing unit is configured to control a first secondary protocol layer of the relay to trigger the BSR, if the third secondary protocol layer of the relay receives the data-volume indication from the second protocol layer;
the processing unit is configured to control the first primary protocol layer of the relay to trigger the BSR, if the primary protocol stack of the relay receives the data-volume indication from the second protocol layer; or
the processing unit is configured to control the first secondary protocol layer of the relay to trigger the BSR, if the secondary protocol stack of the relay receives the data-volume indication from the second protocol layer.

14. The relay device of claim 10, wherein
the processing unit is further configured to obtain a sum of an existing data volume of the certain service and a predicted data volume of the certain service from a child node; and
the processing unit is configured to determine that the preset condition is met and control a second protocol layer of the relay to transmit an indication to a third secondary protocol layer, if the sum is greater than or equal to a second threshold;
the processing unit is configured to determine that the preset condition is met and control the second protocol layer of the relay to transmit the indication to a secondary protocol stack, if the sum is greater than or equal to the second threshold, wherein
the third primary protocol layer is a third protocol layer associated with a primary base station, the primary protocol stack is a protocol stack associated with the primary base station, the secondary protocol stack is a protocol stack associated with a secondary base station, and the third secondary protocol layer is a third protocol layer associated with the secondary base station.

15. The relay device of claim 10, wherein
the processing unit is configured to control a first secondary protocol layer of the relay to trigger a pre-emptive BSR, if the third secondary protocol layer of the relay receives a data-volume indication from the second protocol layer; or
the processing unit is configured to control the first secondary protocol layer of the relay to trigger the pre-emptive BSR, if the secondary protocol stack of the relay receives the data-volume indication from the second protocol layer.

16. The relay device of any one of claims 11 to 15, wherein the first protocol layer is a medium access control (MAC) layer.

17. The user equipment (UE) of any one of claims 12 to 15, wherein the third protocol layer is a radio link control (RLC) layer, and the second protocol layer is a packet data convergence protocol (PDCP) layer or a backhaul adaptation protocol (BAP) layer.

18. The UE of any one of claims 10 to 17, wherein the protocol stack is a preset protocol stack or a protocol stack determined by a network device.

19. An electronic device, comprising a processor, a memory configured to store one or more programs, and a communication interface, wherein the one or more programs are configured to be executed by the processor and comprise instructions configured to perform the method of any one of claims 1 to 9.

20. A chip system, comprising at least one processor, a memory, and an interface circuit, wherein the memory, the transceiver, and the at least one processor are connected with each other via a line, and the at least one memory is configured to store computer programs which, when executed by the processor, are operable with the processor to implement the method of any one of claims 1 to 9.

21. A terminal device configured to support a relay device to perform the method of any one of claims 1 to 9.

22. A computer-readable storage medium storing computer programs which, when run on a user equipment (UE), are operable with the UE to perform the method of any one of claims 1 to 9.

23. A computer program product, comprising a non-transitory computer-readable storage medium storing computer programs, the computer programs being operable with a computer to perform the method of any one of claims 1 to 9.
